(19) Europäisches Patentamt / European Patent Office / Office européen des brevets

(11) **EP 2 516 353 B1**

(12) **FASCICULE DE BREVET EUROPEEN**

(45) Date de publication et mention
de la délivrance du brevet:
**25.02.2015 Bulletin 2015/09**

(21) Numéro de dépôt: **10814705.9**

(22) Date de dépôt: **21.12.2010**

(51) Int Cl.:
*C04B 35/486* (2006.01)   *C04B 35/488* (2006.01)

(86) Numéro de dépôt international:
**PCT/IB2010/055992**

(87) Numéro de publication internationale:
**WO 2011/077380 (30.06.2011 Gazette 2011/26)**

(54) **POUDRE DE GRANULES DE ZIRCONE ET D'ALUMINE**

PULVER AUS ZIRCONIA- UND ALUMINAGRANULATE

POWDER OF ZIRCONIA AND ALUMINA GRANULES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.12.2009 FR 0959578**

(43) Date de publication de la demande:
**31.10.2012 Bulletin 2012/44**

(73) Titulaire: **Saint-Gobain Centre De Recherches
Et D'etudes Europeen
92400 Courbevoie (FR)**

(72) Inventeur: **NAHAS, Nabil
F-77700 Serris (FR)**

(74) Mandataire: **Nony
3, rue de Penthièvre
75008 Paris (FR)**

(56) Documents cités:
**EP-A1- 0 313 412    EP-A2- 1 452 506
US-A- 5 908 712**

**Description**

**Domaine technique**

L'invention concerne une poudre de granules à base de zircone et d'alumine, un procédé de fabrication de tels granules et une pièce frittée obtenue à partir de tels granules.

**Etat de la technique**

Dans une pièce frittée à base de zircone et d'alumine, en particulier dans une pièce présentant un volume supérieur à 100 cm$^3$, la résistance mécanique diminue avec la quantité de défauts au sein de la pièce et augmente avec la masse volumique.

Il existe un besoin permanent pour une poudre permettant de fabriquer une pièce frittée à base de zircone et d'alumine présentant un volume supérieur à 100 cm$^3$, en particulier dont toutes les dimensions sont supérieures à 2 cm, de bonnes performances mécaniques et une masse volumique élevée.

Un but de l'invention est de répondre à ce besoin.

**Résumé de l'invention**

L'invention propose une poudre de granules destinée notamment à la fabrication de pièces frittées céramiques, ladite poudre présentant la composition chimique massique suivante, sur la base de la matière sèche :

- ZrO$_2$ : complément à 100% ;
- un stabilisant de la zircone choisi dans le groupe formé par Y$_2$O$_3$, Sc$_2$O$_3$, MgO, CaO, CeO$_2$, et leurs mélanges, la teneur massique en stabilisant, sur la base de la somme des teneurs en zircone et en stabilisant, étant comprise entre 2,0% et 20%, la teneur MgO + CaO étant inférieure à 5,0%, sur la base de la somme des teneurs en zircone et en stabilisant (c'est-à-dire sur la base de la somme de ZrO$_2$, Y$_2$O$_3$, Sc$_2$O$_3$, MgO, CaO et CeO$_2$);
- au moins 1,0% d'un premier liant présentant une température de transition vitreuse (Tg) inférieure ou égale à 25°C ;
- 0 à 4,0% d'un liant additionnel présentant une température de transition vitreuse supérieure à 25°C ;
- 5 à 50,0% d'alumine;
- 0 à 2,0% d'un additif de frittage de l'alumine;
- 0 à 4,0% d'un additif temporaire différent d'un premier liant et d'un liant additionnel, la teneur totale dudit premier liant, dudit liant additionnel et dudit additif temporaire étant inférieure à 9,0% ;
- 0 à 6,0% d'un oxyde additionnel choisi parmi un oxyde de manganèse, ZnO, La$_2$O$_3$. SrO, BaO et leurs mélanges ;
- moins de 2,0% d'impuretés ;

la teneur totale en oxyde de lanthane étant inférieure à 6,0% ;
le diamètre médian D$_{50}$ de la poudre étant compris entre 80 et 130 $\mu$m, le percentile D$_{99,5}$ étant inférieur à 500 $\mu$m et la masse volumique relative des granules étant comprise entre 30% et 60%.

De préférence, plus de 80%, plus de 90%, voire sensiblement 100% des granules présentent une composition conforme à la composition de la poudre.

Comme on le verra plus en détail dans la suite de la description, les inventeurs ont découvert que la distribution particulière des tailles de granules selon l'invention permet d'obtenir d'excellentes performances mécaniques, à condition de limiter la teneur totale du premier liant, du liant additionnel et de l'additif temporaire à moins de 9,0%. Les inventeurs ont en effet constaté que, contrairement à l'habitude consistant à augmenter la teneur en liant en proportion du diamètre médian, il était avantageux, dans la plage de diamètres médians revendiquée, de maintenir la teneur en premier liant relativement faible. En particulier, ils ont découvert que cette limitation de la teneur en premier liant limite l'apparition de défauts internes permanents, c'est-à-dire non éliminés lors du frittage de la préforme obtenue par pressage desdits granules.

Les inventeurs ont également constaté que, contrairement à l'habitude consistant à ajouter des liants présentant des températures de transition vitreuse élevées afin d'améliorer la résistance mécanique en cru, il était avantageux de sélectionner des liants présentant une température de transition vitreuse inférieure à 25°C. Ils ont en effet constaté que ce type de liant facilite la déformation des granules lors du pressage sans pour autant diminuer de façon rédhibitoire leur résistance mécanique en cru.

L'utilisation d'un liant présentant une température de transition vitreuse faible est contraire à un préjugé technique selon lequel on considère que la résistance mécanique en cru diminue avec la température de transition vitreuse du liant.

Une poudre selon l'invention peut encore comporter une ou plusieurs des caractéristiques optionnelles et préférées suivantes :

- La masse volumique relative des granules est comprise entre 40% et 50%.
- La teneur dudit stabilisant est inférieure à 15%, de préférence inférieure à 12%, de préférence inférieure à 10%, de préférence inférieure à 8%, de préférence inférieure à 6,5% et/ou supérieure à 4%, sur la base de la somme de $ZrO_2$, $Y_2O_3$, $Sc_2O_3$, $MgO$, $CaO$ et $CeO_2$.
- Les granules incorporent des particules dudit stabilisant dont le diamètre médian est inférieur à 0,8 μm, de préférence inférieur à 0,5 μm.
- Au moins une partie dudit stabilisant est remplacée par une quantité équivalente de précurseur dudit stabilisant.
- Les granules incorporent des particules de zircone dont le diamètre médian ($D_{50}$) est inférieur à 1 μm, de préférence inférieur à 0,8 μm, voire inférieur à 0,5 μm.
- La teneur en alumine étant de préférence supérieure à 10%, de préférence supérieure à 15% et/ou inférieure 40%, de préférence inférieure à 30%, de préférence encore inférieure 25%.
- Les granules contiennent de l'alumine. De préférence plus de 50% en masse de l'alumine est de l'alumine alpha. De préférence l'alumine est sensiblement entièrement de l'alumine alpha.
- Les granules incorporent des particules d'alumine dont le diamètre médian ($D_{50}$) est inférieur à 5 μm, de préférence inférieur à 1 μm, de préférence inférieur à 0,8 μm, voire inférieur à 0,5 μm.
- Le premier liant présente une température de transition vitreuse supérieure à -30°C et/ou inférieure à 20°C, de préférence inférieure à 15°C.
- Le premier liant est choisi parmi les polymères organiques amorphes, les résines polyacryliques, les polymères à base d'acrylates purs, les co-polymères à base d'acrylates et de styrène, et leurs mélanges. De préférence, le premier liant est choisi parmi les résines polyacryliques, les polymères à base d'acrylates purs, les co-polymères à base d'acrylates et de styrène, et leurs mélanges. De préférence encore, le premier liant est choisi parmi les résines polyacryliques, les co-polymères à base d'acrylates et de styrène, et leurs mélanges.
- De préférence, la zircone et/ou l'alumine et/ou le premier liant et/ou le liant additionnel et/ou l'additif temporaire, de préférence la zircone et l'alumine et le premier liant et le liant additionnel et l'additif temporaire, sont répartis de façon homogène au sein des granules de la poudre.
- Le premier liant et/ou le liant additionnel sont choisis parmi les polymères ne contenant pas d'éléments inorganiques.
- La poudre comporte un additif de frittage de l'alumine choisi parmi l'oxyde de titane, l'oxyde de lanthane et leurs mélanges. De préférence, l'additif de frittage de l'alumine est l'oxyde lanthane. De préférence la teneur en additif de frittage de l'alumine est supérieure à 0,2% et/ou inférieure à 1%, de préférence inférieure à 0,8%.
- La teneur en additif temporaire est inférieure à 1%. De préférence, l'additif temporaire est un additif organique, de préférence choisi parmi les dispersants ou tensio-actifs, les épaississants, les anti-moussants, les conservateurs, les lubrifiants, et leurs mélanges.
- La teneur en impuretés est inférieure à 1,0%, de préférence inférieure à 0,5%, voire inférieure à 0,3%, voire inférieure à 0,1%. De préférence, les impuretés sont des oxydes.
- Le diamètre médian ($D_{50}$) de la poudre est supérieur à 90 μm et/ou inférieur à 120 μm.
- Le percentile 10 ($D_{10}$) est supérieur à 40 μm, de préférence supérieur à 50 μm, de préférence encore supérieur à 60 μm.
- Le percentile 90 ($D_{90}$) est inférieur à 300 μm, de préférence inférieur à 250 μm, de préférence encore inférieur à 200 μm.
- Le percentile 99,5 ($D_{99,5}$) est inférieur à 400 μm, de préférence encore inférieur à 300 μm.

Dans un mode de réalisation avantageux, le stabilisant est choisi dans le groupe formé par $Y_2O_3$, $Sc_2O_3$ et leurs mélanges et la teneur dudit stabilisant est inférieure à 6,5%, sur la base de la somme de $ZrO_2$, $Y_2O_3$ et $Sc_2O_3$.
Dans un mode de réalisation avantageux, le stabilisant est choisi dans le groupe formé par $MgO$, $CaO$ et leurs mélanges et la teneur dudit stabilisant est inférieure à 4%, sur la base de la somme de $ZrO_2$, $MgO$ et $CaO$.
Dans un mode de réalisation avantageux, le stabilisant est $CeO_2$ et la teneur dudit stabilisant est supérieure à 10% et inférieure à 15%, sur la base de la somme de $ZrO_2$, $Y_2O_3$ et $CeO_2$.
Dans un mode de réalisation avantageux, le stabilisant est choisi dans le groupe formé par $Y_2O_3$, $CeO_2$ et leurs mélanges, et respecte de préférence la relation 10% ≤ 3.$Y_2O_3$ + $CeO_2$ ≤ 20%, sur la base de la somme de $ZrO_2$, $Y_2O_3$ et $CeO_2$.
Dans un mode de réalisation avantageux, le stabilisant est $Y_2O_3$, c'est-à-dire que les granules ne comportent que $Y_2O_3$ comme stabilisant. Notamment dans ce mode de réalisation, la teneur en $Y_2O_3$ est de préférence supérieure à 3%, de préférence supérieure à 4%, de préférence supérieure à 4,5% et/ou inférieure à 6,5%, de préférence inférieure à 5,5%, sur la base de la somme de $ZrO_2$ et $Y_2O_3$.
Les granules peuvent comporter de la zircone stabilisée, ou un mélange de particules de zircone, stabilisée ou non, et de particules dudit stabilisant, ou un mélange de particules dans lesquelles de la zircone, stabilisée ou non, et dudit stabilisant sont intimement mélangés. Dans un mode de réalisation, les granules comportent des particules dans lesquelles la zircone, stabilisée ou non, et le stabilisant sont intimement mélangés. De préférence, les granules comportent des particules dans lesquelles la zircone est stabilisée, c'est-à-dire que le stabilisant est en solution solide dans les particules de zircone. De préférence, les granules comportent des particules dans lesquelles la zircone stabilisée et de l'alumine sont intimement mélangées.

Dans un premier mode de réalisation particulier, le stabilisant est $Y_2O_3$, la teneur en stabilisant est comprise entre 4,5% et 5,5% en pourcentage en masse sur la base de la somme de $ZrO_2$ et $Y_2O_3$, la teneur en alumine est supérieure à 15% et inférieure à 25%, de préférence sensiblement égale à 20% en pourcentage en masse sur la base de la matière sèche, la teneur en premier liant est comprise entre 2,5% et 4% en pourcentage en masse sur la base de la matière sèche, la teneur en oxyde de lanthane est supérieure à 0,2% et inférieure à 0,8%, de préférence sensiblement égale à 0,5% en pourcentage en masse sur la base de la matière sèche, la teneur en impuretés est inférieure à 0,5%, de préférence inférieure à 0,1% en pourcentage en masse sur la base de la matière sèche, et la teneur en humidité résiduelle est comprise entre 0,2 et 1%, de préférence comprise entre 0,2% et 0,6%, en pourcentage en masse sur la base de la poudre humide.

Dans un deuxième mode de réalisation particulier, le stabilisant est $Y_2O_3$, la teneur en stabilisant est comprise entre 4,5% et 5,5% en pourcentage en masse sur la base de la somme de $ZrO_2$ et $Y_2O_3$, la teneur en alumine est supérieure à 15% et inférieure à 25%, de préférence sensiblement égale à 20% en pourcentage en masse sur la base de la matière sèche, la teneur en premier liant est comprise entre 2,5% et 4% en pourcentage en masse sur la base de la matière sèche, la teneur en liant additionnel est comprise entre 0,5% et 2%, de préférence entre 0,5% et 1%, en pourcentage en masse sur la base de la matière sèche, la teneur en oxyde de lanthane est supérieure à 0,2% et inférieure à 0,8%, de préférence sensiblement égale à 0,5% en pourcentage en masse sur la base de la matière sèche, la teneur en impuretés est inférieure à 0,5%, de préférence inférieure à 0,1% en pourcentage en masse sur la base de la matière sèche, et la teneur en humidité résiduelle est comprise entre 0,2 et 1%, de préférence comprise entre 0,2% et 0,6%, en pourcentage en masse sur la base de la poudre humide.

Dans un troisième mode de réalisation particulier, le stabilisant est $Y_2O_3$, la teneur en stabilisant est comprise entre 4,5% et 5,5% en pourcentage en masse sur la base de la somme de $ZrO_2$ et $Y_2O_3$, la teneur en alumine est supérieure à 15% et inférieure à 25%, de préférence sensiblement égale à 20% en pourcentage en masse sur la base de la matière sèche, la teneur en premier liant est comprise entre 2,5% et 4% en pourcentage en masse sur la base de la matière sèche, la teneur en liant additionnel est comprise entre 0,5% et 2%, de préférence entre 0,5% et 1%, en pourcentage en masse sur la base de la matière sèche, la teneur en additif temporaire est comprise entre 0,5% et 1%, en pourcentage en masse sur la base de la matière sèche, la teneur en oxyde de lanthane est supérieure à 0,2% et inférieure à 0,8%, de préférence sensiblement égale à 0,5% en pourcentage en masse sur la base de la matière sèche, la teneur en impuretés est inférieure à 0,5%, de préférence inférieure à 0,1% en pourcentage en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un quatrième mode de réalisation particulier, le stabilisant est $Y_2O_3$, la teneur en stabilisant est comprise entre 4,5% et 5,5% en pourcentage en masse sur la base de la somme de $ZrO_2$ et $Y_2O_3$, la teneur en alumine est supérieure à 15% et inférieure à 25%, de préférence sensiblement égale à 20% en pourcentage en masse sur la base de la matière sèche, la teneur en premier liant est comprise entre 2,5% et 4% en pourcentage en masse sur la base de la matière sèche, la teneur en impuretés est inférieure à 0,5%, de préférence inférieure à 0.1% en pourcentage en masse sur la base de la matière sèche, et la teneur en humidité résiduelle est comprise entre 0,2% et 1%, de préférence comprise entre 0,2% et 0,6%, en pourcentage en masse sur la base de la poudre humide.

Dans un cinquième mode de réalisation particulier, le stabilisant est $Y_2O_3$, la teneur en stabilisant est comprise entre 4,5% et 5,5% en pourcentage en masse sur la base de la somme de $ZrO_2$ et $Y_2O_3$, la teneur en alumine est supérieure à 15% et inférieure à 25%, de préférence sensiblement égale à 20% en pourcentage en masse sur la base de la matière sèche, la teneur en premier liant est comprise entre 2,5% et 4% en pourcentage en masse sur la base de la matière sèche, la teneur en liant additionnel est comprise entre 0,5% et 2%, de préférence entre 0,5% et 1%, en pourcentage en masse sur la base de la matière sèche, la teneur en impuretés est inférieure à 0,5%, de préférence inférieure à 0,1 % en pourcentage en masse sur la base de la matière sèche, et la teneur en humidité résiduelle est comprise entre 0,2 et 1%, de préférence comprise entre 0,2% et 0,6%, en pourcentage en masse sur la base de la poudre humide.

Dans un sixième mode de réalisation particulier, le stabilisant est $Y_2O_3$, la teneur en stabilisant est comprise entre 4,5% et 5,5% en pourcentage en masse sur la base de la somme de $ZrO_2$ et $Y_2O_3$, la teneur en alumine est supérieure à 15% et inférieure à 25%, de préférence sensiblement égale à 20% en pourcentage en masse sur la base de la matière sèche, la teneur en premier liant est comprise entre 2,5% et 4% en pourcentage en masse sur la base de la matière sèche, la teneur en liant additionnel est comprise entre 0,5% et 2%, de préférence entre 0,5% et 1%, en pourcentage en masse sur la base de la matière sèche, la teneur en additif temporaire est comprise entre 0,5% et 1%, en pourcentage en masse sur la base de la matière sèche, la teneur en impuretés est inférieure à 0,5%, de préférence inférieure à 0,1% en pourcentage en masse sur la base de la matière sèche, et la teneur en humidité résiduelle est comprise entre 0,2 et 1%, de préférence comprise entre 0,2% et 0,6%, en pourcentage en masse sur la base de la poudre humide.

Dans un septième mode de réalisation particulier, le stabilisant de la zircone est $CeO_2$, la teneur en stabilisant est comprise entre 10% et 15% en pourcentages en masse sur la base de la somme de $ZrO_2$ et $CeO_2$, la teneur en alumine est supérieure à 15% et inférieure à 25%, de préférence sensiblement égale à 20% en pourcentages en masse sur la base de la matière sèche, la teneur en premier liant est comprise entre 2,5 et 4% en pourcentages en masse sur la base de la matière sèche, et la teneur en impuretés est inférieure à 0,5%, de préférence inférieure à 0,1% en pourcentages en masse sur la base de la matière sèche, et la teneur en humidité résiduelle est comprise entre 0,2% et 1%, de préférence comprise entre 0,2% et 0,6%, en pourcentages en masse sur la base de la poudre humide.

Dans un huitième mode de réalisation particulier, le stabilisant de la zircone est un mélange de $Y_2O_3$ et de $CeO_2$, la teneur en $Y_2O_3$ est comprise entre 1% et 2% en pourcentage en masse sur la base de la somme de $ZrO_2$, $Y_2O_3$ et $CeO_2$, la teneur en $CeO_2$ est comprise entre 11% et 13% en pourcentage en masse sur la base de la somme de $ZrO_2$, $Y_2O_3$ et $CeO_2$, la teneur en alumine est supérieure à 15% et inférieure à 25%, de préférence sensiblement égale à 20% en pourcentage en masse sur la base de la matière sèche, la teneur en premier liant est comprise entre 2,5% et 4% en pourcentage en masse sur la base de la matière sèche, la teneur en impuretés est inférieure à 0,5%, de préférence inférieure à 0,1% en pourcentage en masse sur la base de la matière sèche, et la teneur en humidité résiduelle est comprise entre 0,2% et 1%, de préférence comprise entre 0,2% et 0,6%, en pourcentage en masse sur la base de la poudre humide.

Dans un neuvième mode de réalisation particulier, le stabilisant de la zircone est un mélange de $Y_2O_3$ et de $CeO_2$, la teneur en $Y_2O_3$ est comprise entre 1 % et 2% en pourcentage en masse sur la base de la somme de $ZrO_2$, $Y_2O_3$ et $CeO_2$, la teneur en $CeO_2$ est comprise entre 11% et 13% en pourcentage en masse sur la base de la somme de $ZrO_2$, $Y_2O_3$ et $CeO_2$, la teneur en alumine est supérieure à 15% et inférieure à 25%, de préférence sensiblement égale à 20% en pourcentage en masse sur la base de la matière sèche, la teneur en oxyde additionnel, de préférence d'un oxyde de manganèse est comprise entre 0,3% et 2% en pourcentage en masse sur la base de la matière sèche, la teneur en la teneur en premier liant est comprise entre 2,5% et 4% en pourcentage en masse sur la base de la matière sèche, la teneur en impuretés est inférieure à 0,5%, de préférence inférieure à 0,1% en pourcentage en masse sur la base de la matière sèche, et la teneur en humidité résiduelle est comprise entre 0,2% et 1%, de préférence comprise entre 0,2% et 0,6%, en pourcentage en masse sur la base de la poudre humide.

De préférence, une poudre selon l'invention est fabriquée par atomisation d'une barbotine, de préférence suivant un procédé comportant les étapes a) à d) décrit ci-après.

Un tel procédé permet avantageusement de fabriquer des granules présentant une masse volumique relative inférieure à 60%, voire inférieure à 50%.

L'invention concerne également un procédé de fabrication d'une pièce frittée comportant les étapes suivantes :

A) mélange de matières premières pour former une charge de départ,
B) mise en forme de ladite charge de départ de manière à obtenir une préforme,
C) optionnellement, usinage de ladite préforme,
D) frittage de ladite préforme de manière à obtenir ladite pièce frittée,
E) optionnellement, usinage et/ou rectification de ladite pièce frittée,

ce procédé étant remarquable en ce que la charge de départ comporte une poudre de granules conforme à l'invention.

L'invention concerne également une préforme obtenue par la mise en oeuvre d'un procédé comportant au moins les étapes A) et B), voire C) d'un procédé de fabrication selon l'invention.

L'invention concerne également une pièce frittée céramique obtenue à partir par frittage d'une préforme, éventuellement usinée, selon l'invention. En particulier, toutes les dimensions de la pièce frittée peuvent être supérieures à 2 cm.

**Définitions**

- Par « liant », on entend un constituant qui, en une quantité adaptée, permet, lors d'une opération de granulation, de former des granules présentant, après séchage, une cohésion autorisant leur manipulation, par exemple leur transvasement d'un récipient à un autre ou leur versement dans un moule (notamment dans des conditions industrielles), sans rupture. De préférence, cette cohésion est au moins celle obtenue avec un liant polymère. L'opération de granulation n'est pas limitative et comprend notamment l'atomisation ou la mise en oeuvre d'un granulateur. L'invention n'est donc pas limitée à des granules fabriqués par atomisation.

- Par « additif temporaire », on entend un constituant qui peut être éliminé lorsque qu'il est soumis à une température supérieure ou égale à 1000°C, par exemple lors d'une opération de frittage à une température supérieure ou égale à 1000°C.

- Un précurseur d'un constituant est un composé capable, lors d'un frittage d'une préforme obtenue à partir d'une poudre selon l'invention, de conduire à ce constituant. Le remplacement d'un constituant par une quantité « équivalente » d'un précurseur de ce constituant ne modifie pas les quantités dudit constituant dans le produit fritté obtenu par frittage d'une poudre selon l'invention.

- Par « impuretés», on entend les constituants inévitables, introduits involontairement et nécessairement avec les matières premières ou résultant de réactions avec ces constituants. Les impuretés ne sont pas des constituants nécessaires, mais seulement tolérés.

- Par «granule », on entend un agglomérat de particules, ledit agglomérat présentant un indice de sphéricité supérieur à 0,6, c'est-à-dire se présentant sous une forme sensiblement sphérique.

- Par « indice de sphéricité » d'un granule, on entend le rapport entre son plus petit diamètre et son plus grand diamètre, les diamètres étant mesurés sur des clichés réalisés par exemple par microscopie optique à un grossissement de x 10.

- Par « masse volumique non tassée » d'une poudre de granules, on entend le rapport égal à la masse d'un volume connu de ladite poudre divisée par ledit volume, le volume étant rempli par chute libre de la poudre, en évitant les vibrations. La masse volumique non tassée est déterminée suivant la norme NF EN 725-9 et est exprimée en $g/cm^3$.

- Par « masse volumique absolue » d'une poudre de granules, on entend classiquement le rapport égal à la masse de matière sèche de ladite poudre après un broyage à une finesse telle qu'il ne demeure sensiblement aucun pore fermé, divisée par le volume de cette masse après broyage. Elle peut être mesurée par pycnométrie à hélium.

- Par « masse volumique réelle » d'une poudre de granules, on entend la moyenne des masses volumiques apparentes de chaque granule de cette poudre.

- Par « masse volumique apparente » d'un granule, on entend classiquement le rapport égal à la masse du granule divisée par le volume qu'occupe ledit granule.

- Par « masse volumique relative » d'une poudre de granules, on entend le rapport égal à la masse volumique réelle divisée par la masse volumique absolue, exprimé en pourcentage.

- Par « température de transition vitreuse » d'un liant, on entend classiquement le milieu de l'intervalle de températures, dit « domaine de transition », dans lequel ledit liant devient progressivement plus visqueux et passe de l'état liquide à l'état solide. La température de transition vitreuse peut être déterminée par analyse calorimétrique différentielle (DSC). Une liste des températures de transition vitreuse des principales familles de polymères est donnée dans l'ouvrage Polymer Handbook (4th Edition) 1999; 2005 John Wiley & Sons. L'amplitude d'un domaine de transition est classiquement d'environ 5 à 10 °C.

- Les percentiles ou « centiles » 10 ($D_{10}$), 50 ($D_{50}$) et 90 ($D_{90}$) d'une poudre sont les tailles de particules correspondant aux pourcentages, en masse, de 10%, 50% et 90% respectivement, sur la courbe de distribution granulométrique cumulée des tailles de particules de la poudre, les tailles de particules étant classées par ordre croissant. Par exemple, 10%, en masse, des granules d'une poudre ont une taille inférieure à $D_{10}$ et 90% des granules en masse ont une taille supérieure à $D_{10}$. Les tailles et les percentiles peuvent être déterminés à l'aide d'une distribution granulométrique réalisée à l'aide d'un granulomètre laser. Le percentile 50 $D_{50}$ est encore classiquement appelé « diamètre médian ».

- Par « constituant organique », on entend classiquement un constituant ne contenant que les éléments carbone, oxygène, azote et hydrogène.

- Dans une source de particules de zircone, $HfO_2$ n'est pas chimiquement dissociable de $ZrO_2$. « $ZrO_2$ » désigne donc classiquement la teneur totale de ces deux oxydes. Selon la présente invention, $HfO_2$ n'est pas ajouté volontairement dans la charge de départ. $HfO_2$ ne désigne donc que les traces d'oxyde d'hafnium, cet oxyde étant toujours naturellement présent dans les sources de zircone à des teneurs généralement inférieures à 5%, voire inférieures à 2%. Par souci de clarté, on peut donc désigner indifféremment la teneur en zircone et en traces d'oxyde d'hafnium par « $ZrO_2+HfO_2$ » ou par « $ZrO_2$ », on encore par « teneur en zircone ».

Par « comportant un », il y a lieu de comprendre "comportant au moins un", sauf indication contraire.

"Un premier liant" (ou "un liant additionnel ») ne correspond pas nécessairement à un unique composé, mais peut correspondre à un mélange de plusieurs composés présentant chacun une température de transition vitreuse inférieure ou égale à 25°C (ou supérieure à 25°C, respectivement). De même, un « stabilisant » ou un « additif temporaire » peuvent correspondre

à des mélanges de plusieurs composés constituant chacun un stabilisant ou un additif temporaire, respectivement.

Sauf indication contraire, tous les pourcentages sont fournis sur la base de la masse de la poudre sèche, à l'exception des pourcentages relatifs aux stabilisants. La teneur en stabilisant d'un oxyde est en effet classiquement définie, par défaut, en pourcentages massiques sur la base de la teneur totale dudit oxyde et dudit stabilisant.

Les propriétés de la poudre peuvent être évaluées par les méthodes de caractérisation mises en oeuvre pour les exemples.

**Description détaillée**

Une poudre de granules selon l'invention peut être fabriquée par un procédé comportant une étape d'atomisation d'une barbotine. Un tel procédé peut notamment comprendre les étapes suivantes :

a) réalisation d'une barbotine par la mise en suspension dans un liquide, de préférence dans de l'eau, des différentes matières premières nécessaires pour obtenir, à l'issue de l'étape b), une poudre de granules selon l'invention ;
b) atomisation de ladite barbotine de manière à former des granules ;
c) optionnellement, tamisage des granules obtenus à l'étape b) ;
d) optionnellement, séchage des granules obtenus à l'étape b) ou c).

A l'étape a), les matières premières sont mélangées dans un liquide, par exemple de l'eau distillée, de manière à former une barbotine.

Dans la barbotine, la teneur massique en matière sèche peut être comprise entre 35 et 70%. La teneur en matière sèche dans la barbotine est ajustée de manière que la masse volumique relative des granules obtenus à l'issue de l'étape b) soit comprise entre 30% et 60%. Une augmentation de cette teneur s'accompagne généralement d'une augmentation de la masse volumique relative des granules obtenus en fin d'étape b).

De préférence, de la zircone et de l'alumine sont introduites dans la charge de départ de manière que la poudre de granules selon l'invention présente une somme des teneurs en zircone et en alumine supérieure à 50%, de préférence supérieure à 60%, voire supérieure à 70%.

La zircone introduite peut être stabilisée avec ledit stabilisant. Le stabilisant peut être également ajouté indépendamment de la zircone. Dans un mode de réalisation, la zircone peut être introduite sous la forme de particules dans lesquelles de la zircone, stabilisée ou non, et du stabilisant sont intimement mélangés, éventuellement avec des particules d'alumine.

Dans un mode de réalisation préféré, la zircone est introduite sous la forme de particules de zircone stabilisée, c'est-à-dire que le stabilisant est en solution solide dans les particules de zircone.

Dans un autre mode de réalisation préféré, la zircone est introduite sous la forme de particules dans lesquelles la zircone stabilisée et de l'alumine sont intimement mélangées.

L'utilisation de particules de zircone stabilisée et/ou de particules dans lesquelles la zircone stabilisée et de l'alumine sont intimement mélangées est en particulier préférée pour les modes de réalisation particuliers décrits ci-dessus.

Les liants sont des constituants de la charge de départ qui rendent possible l'agglomération lors de l'atomisation.

Classiquement, la fabrication de granules met en oeuvre des liants du type APV ("PVA" en anglais) ou PEG, les liants de type APV ou les PEG ayant un poids moléculaire supérieur à 600 Da ne présentent pas une température de transition vitreuse (Tg) inférieure ou égale à 25°C. Les inventeurs ont découvert que la présence d'un liant présentant une température de transition vitreuse (Tg) inférieure ou égale à 25°C, ou "premier liant", favorise la déformation des granules lors du pressage et réduit le nombre de défauts. Elle conduit ainsi à une amélioration des propriétés mécaniques de la pièce frittée obtenue à partir de la poudre selon l'invention.

Une teneur en premier liant inférieure à 1% ne conduit cependant pas à un effet quantifiable. De préférence, le premier liant présente une température de transition vitreuse supérieure à -30°C, de préférence supérieure à -20°C, voire supérieure à -15 °C et/ou inférieure à 20°C, voire inférieure à 15°C.

Le premier liant peut être choisi parmi les polymères. Une liste de tels polymères est divulguée dans « Polymer Handbook (4th Edition) », 1999; 2005 John Wiley & Sons. De préférence, le premier liant est choisi parmi les polymères organiques amorphes et leurs mélanges. De préférence, le premier liant est choisi parmi les polymères à base d'acrylates (monomère-($CH_2$=CHCOO-)-), purs ou sous forme de co-polymères (avec des monomères styrènes par exemple) et leurs mélanges. Le polymère peut ainsi être une résine acrylique. De préférence, le premier liant est choisi parmi les polymères à base d'acrylates purs (monomère-($CH_2$=CHCOO-)-), les co-polymères à base d'acrylates (monomère -($CH_2$=CHCOO-)-) et de styrène (monomère -($C_8H_8$)) et leurs mélanges.

De préférence, le premier liant est choisi parmi les polymères organiques présentant après durcissement une résistance à la rupture supérieure à 1 N/mm$^2$, voire supérieure à 5 N/mm$^2$, mesurée suivant la norme DIN53455.

De préférence toujours, le premier liant est choisi parmi les polymères organiques présentant après durcissement une élongation à la rupture supérieure à 100%, de préférence supérieure à 200%, voire supérieure à 500%, mesurée suivant la norme DIN53455.

De préférence, le premier liant est choisi parmi les polymères ne contenant pas d'éléments inorganiques, en particulier les éléments de la colonne 1, et notamment le lithium (Li), le sodium (Na) et le potassium (K), ainsi que les éléments de la colonne 17, et notamment le fluor (F), le chlore (Cl), le brome (Br), l'iode (I). Avantageusement, la teneur en impuretés est réduite et la résistance mécanique des pièces frittées réalisées à partir des poudres de granules selon l'invention est accrue.

De préférence, la teneur en premier liant est déterminée de manière à être supérieure à 2%, de préférence supérieure à 2,5% et/ou inférieure à 8%, de préférence inférieure à 6%, de préférence inférieure à 5%, de préférence inférieure à 4% dans la poudre fabriquée.

Le liant additionnel est de préférence choisi parmi les polymères présentant une température de transition vitreuse supérieure à 25°C et inférieure à 100°C, de préférence inférieure à 80°C, de préférence inférieure à 50°C, voire inférieure à 40°C, et leurs mélanges.

De préférence, la teneur en liant additionnel est inférieure à 3%, de préférence inférieure à 2%, de préférence encore inférieure à 1% et/ou supérieure à 0,5%.

De préférence, le liant additionnel est un polymère ne contenant pas d'éléments inorganiques, en particulier les éléments des colonnes 1 et 17. Avantageusement la teneur en impuretés est réduite et la résistance mécanique des pièces réalisées à partir des granules selon l'invention est accrue.

De préférence, le liant additionnel est choisi parmi les polymères organiques amorphes et leurs mélanges. De préférence, le liant additionnel est choisi parmi les composés à base d'alcools. De préférence, le liant additionnel est choisi par les alcools polyvinyliques et les polyalkylènes glycols, de préférence choisi par les polyéthylènes glycols de poids moléculaire supérieur à 600 Da.

Un additif temporaire peut être ajouté lors de la fabrication des granules.

L'additif temporaire est de préférence un additif organique, qui, selon des règles bien connues de l'homme du métier, peut être notamment ajouté pour faciliter la fabrication des granules ou leur mise en forme.

La teneur en additif temporaire est de préférence supérieure à 0,5% et/ou inférieure à 1%, la teneur totale de liant(s) et d'additif temporaire étant de préférence inférieure à 8%, de préférence inférieure à 6%, de préférence inférieure à 5%, voire inférieure à 4%, en pourcentage en masse sur la base de la matière sèche. De préférence, l'additif organique est choisi parmi les dispersants ou tensio-actifs, les épaississants, les anti-moussants, les conservateurs ou biocides, les lubrifiants, et leurs mélanges. A titre d'exemples, les dispersants ou tensio-actifs peuvent être des polyacrylates ou des surfactants ioniques ou non-ioniques, de la famille des DOLAPIX commercialisés par Zschimmer-Schwarz ou encore des DARVAN ou acides méthacryliques commercialisés par R.T. Vanderbilt Company. Les épaississants peuvent être des émulsions d'acides acryliques commercialisées par Zschimmer-Schwarz ou par BASF. Les anti-moussants peuvent être ceux de la gamme commercialisée par Zschimmer-Schwarz. Les conservateurs ou biocides peuvent être des sels d'ammonium quaternaires commercialisés par Zschimmer-Schwarz ou BASF. Les lubrifiants peuvent être ceux de la gamme commercialisée par Zschimmer-Schwarz.

Dans un mode de réalisation, les granules contiennent un oxyde additionnel choisi parmi un oxyde de manganèse, ZnO, $La_2O_3$, SrO, BaO et leurs mélanges. Avantageusement, la présence d'un dit oxyde additionnel augmente la quantité de grains de forme allongée contenus dans les pièces obtenues après frittage et en améliore les performances mécaniques.

L'oxyde additionnel peut être choisi parmi MnO, $MnO_2$, $Mn_2O_3$, $Mn_3O_4$, ZnO, $La_2O_3$, SrO, et leurs mélanges.

L'oxyde additionnel peut être notamment choisi parmi les oxydes de manganèse MnO, $MnO_2$, $Mn_2O_3$, $Mn_3O_4$ et leurs mélanges. De préférence, l'oxyde additionnel est choisi parmi MnO, $Mn_3O_4$ et leurs mélanges.

La teneur en oxyde additionnel dans la poudre est de préférence supérieure à 0,2%, de préférence supérieure à 0,3%, voire supérieure à 0,5% et/ou inférieure à 5%, voire inférieure à 4%, voire inférieure à 3%, voire inférieure à 2,5%, voire inférieure à 2%, voire inférieure à 1,5%, voire inférieure à 1%, en pourcentage en masse sur la base de la matière sèche.

Les poudres d'oxydes additionnels peuvent également être remplacées, au moins partiellement, par des poudres de précurseurs de ces oxydes, introduits dans des quantités équivalentes.

Dans un mode de réalisation, l'alumine, l'additif de frittage et l'oxyde additionnel peuvent être introduits sous la forme de particules dans lesquelles ces éléments sont intimement mélangés.

Dans un mode de réalisation particulier, les granules ne contiennent pas d'oxyde additionnel.

De préférence, la pureté des matières premières est déterminée de manière que la teneur en impuretés d'une poudre de granules selon l'invention est inférieure à 1%, de préférence inférieure à 0,5%, voire inférieure à 0,3%, voire inférieure à 0,1%. L'oxyde d'hafnium n'est pas considéré comme une impureté.

De préférence les impuretés sont des oxydes.

De préférence, les matières premières sont choisies de manière que les granules ne contiennent aucun autre constituant que la zircone, le stabilisant de la zircone, l'alumine, l'additif de frittage de l'alumine, l'oxyde additionnel, les liants, l'additif temporaire, l'humidité résiduelle et les impuretés.

De préférence, les poudres de zircone, d'alumine, d'additif de frittage de l'alumine, d'oxyde additionnel, et de stabilisant, sont introduites dans la barbotine avant le(s) liant(s) et l'additif temporaire optionnel.

Chacune des différentes matières premières des granules, en particulier les poudres d'oxydes réfractaires, présente de préférence un diamètre médian inférieur à 50 $\mu$m, de préférence inférieur à 20 $\mu$m, de préférence inférieur à 10 $\mu$m, et/ou une aire spécifique de préférence inférieure à 30 m$^2$/g, de préférence inférieure à 20 m$^2$/g.

En fin d'étape a), la matière sèche de la barbotine préparée présente de préférence un diamètre médian inférieur à 1 $\mu$m, de préférence inférieur à 0,5 $\mu$m, de préférence encore inférieur à 0,3 $\mu$m et une aire spécifique supérieure à 5 m$^2$/g, de préférence supérieure à 6 m$^2$/g et/ou inférieure à 30 m$^2$/g, de préférence inférieure à 20 m$^2$/g.

A cet effet, en particulier si les matières premières ne présentent pas un diamètre médian et/ou une aire spécifique adaptés, la barbotine est de préférence dispersée ou broyée selon des méthodes bien connues de l'homme du métier, par exemple par passage de la barbotine dans un broyeur, de préférence un broyeur à attrition. Cette étape permet avantageusement d'obtenir une bonne homogénéité des différents composés de la poudre désirée en fin d'étape a). En particulier, cette étape conduit à une répartition sensiblement homogène du premier liant au sein des granules de la poudre.

Si l'étape a) contient une opération de broyage, le liant additionnel et l'additif temporaire optionnels, ainsi que le premier liant sont, de préférence, introduits après cette étape.

A l'étape b), l'atomisation conduit à des particules présentant une masse volumique relative faible, comprise entre 30 et 60%, à la différence des procédés comme la granulation par roulage, « rolling granulation » en anglais, ou le « coulage en goutte », « drip casting » en anglais, qui classiquement conduisent à des masses volumiques relatives élevées.

De préférence, l'atomisation est effectuée de manière que les granules contiennent de l'humidité résiduelle, la teneur en humidité étant de préférence inférieure 1%, de préférence inférieure à 0,6%, et/ou supérieure à 0,2%, en pourcentage en masse sur la base de la poudre humide. Avantageusement, une teneur en humidité résiduelle supérieure à 0,2% contribue à la déformation des granules sous l'effet de la pression. Une teneur en humidité résiduelle supérieure à 1% peut cependant entraîner une augmentation du nombre de défauts en surface des préformes fabriquées par pressage à partir d'une poudre de granules selon l'invention, par exemple suite à un collage desdites préformes sur les parois des moules utilisés pour le pressage.

Plus de 80%, de préférence plus de 90% en nombre des granules présentent un indice de sphéricité supérieur à 0,6, de préférence supérieur à 0,7, de préférence supérieur à 0,8, de préférence supérieur à 0,9.

A l'étape c), le tamisage optionnel est de préférence effectué à l'aide de tamis d'ouverture inférieure à 500 $\mu$m, voire inférieure à 400 $\mu$m. Avantageusement, cette étape permet d'éliminer les plus gros granules, ce qui peut être utile pour certaines applications.

A l'étape d), le séchage éventuel est de préférence effectué à une température comprise entre 80°C et 110°C, pendant une durée de préférence supérieure à 2 heures.

De préférence, le procédé ne contient pas d'étape d).

Les inventeurs ont constaté qu'une poudre selon l'invention peut présenter les propriétés suivantes :

- La masse volumique relative des granules est de préférence supérieure à 40% et/ou inférieure à 50%.
- La masse volumique non tassée de la poudre est supérieure à 1,3 g/cm$^3$, de préférence supérieure à 1,4 g/cm$^3$, de préférence supérieure à 1,5 g/cm$^3$ et/ou inférieure à 1,8 g/cm$^3$, de préférence inférieure à 1,7 g/cm$^3$.
- La coulabilité de la poudre est supérieure à 1 g/s, de préférence supérieure à 1,5 g/s, de préférence supérieure à 2 g/s.

Une poudre de granules selon l'invention peut être mise en oeuvre pour fabriquer une pièce frittée suivant les étapes A) à E).

L'étape A) peut comprendre les étapes a) et b), voire c) et/ou d).

La charge de départ peut être constituée d'une poudre de granules selon l'invention.

En variante, la charge de départ peut comporter une poudre de granules selon l'invention et une ou plusieurs autres poudres.. De préférence, la poudre de granules selon l'invention représente au moins 60%, de préférence au moins 75%, de préférence au moins 90%, de préférence au moins 95% de la masse de la charge de départ.

A l'étape B), la mise en forme est de préférence réalisée par pressage, injection plastique ou par extrusion, de préférence par pressage. De préférence, le pressage est choisi parmi les techniques de pressage à froid et de pressage isostatique à froid.

Dans le cas d'une mise en forme par pressage, la charge de départ est versée dans un moule, puis soumise à une pression de préférence supérieure à 80 MPa et de préférence inférieure à 200 MPa, voire inférieure à 150 MPa, de manière à constituer une pièce crue, ou « préforme ». Les granules de la poudre selon l'invention se déforment efficacement sous l'effet de cette pression. La préforme peut alors être démoulée.

A l'étape C) optionnelle, la préforme peut être usinée, selon toute technique connue de l'homme du métier.

A l'étape D), la préforme est frittée, de préférence sous air, de préférence à pression atmosphérique ou sous pression (pressage à chaud (« Hot Pressing » en anglais) et/ou pressage isostatique à chaud (« Hot Isostatic Pressing » en anglais, ou HIP)) et à une température comprise entre 1400°C et 1600°C, de préférence supérieure à 1450°C et/ou inférieure à 1550°C, de manière à constituer une pièce frittée.

Les étapes B) et D) peuvent être réalisées en une seule étape, par exemple par un pressage à chaud.

A l'étape E) optionnelle, la pièce frittée peut être usinée, selon toute technique connue de l'homme du métier.

**Exemples**

Les exemples non limitatifs suivants ont été fabriqués suivant un procédé comportant les étapes A) à E) ci-dessus.

L'étape A) présente les étapes a), b) et c) suivantes.

A l'étape a), pour chacun des exemples réalisés, la poudre de zircone dont les principales caractéristiques figurent dans le tableau 1 ci-dessous est dispersée par microbroyage avec de la poudre d'alumine dont les principales caractéristiques figurent dans le tableau 2 ci-dessous.

Tableau 1

| Poudre de zircone yttriée | |
|---|---|
| $ZrO_2$ (% massique) | Complément à 100% |
| $Y_2O_3$ (% massique) | 5,3 |
| $Al_2O_3$ (ppm) | 2500 |
| $SiO_2$ (ppm) | 100 |
| $Na_2O$ (ppm) | 100 |
| CaO (ppm) | 30 |
| $Fe_2O_3$ (ppm) | 10 |
| MgO (ppm) | <20 |
| $TiO_2$ (ppm) | <20 |
| Aire spécifique ($m^2/g$) | 7 |
| $D_{10}$ ($\mu m$) | 0,2 |
| $D_{50}$ ($\mu m$) | 0,4 |
| $D_{90}$ ($\mu m$) | 1,0 |

Tableau 2

| Poudre d'alumine alpha | |
|---|---|
| $Al_2O_3$ (% massique) | Complément à 100% |
| $SiO_2$ (ppm) | 20 |
| $Na_2O$ (ppm) | 50 |
| CaO (ppm) | 20 |
| $Fe_2O_3$ (ppm) | 25 |
| MgO (ppm) | <20 |
| $TiO_2$ (ppm) | <20 |
| Aire spécifique ($m^2/g$) | 7 |
| $D_{10}$ ($\mu m$) | 0,2 |
| $D_{50}$ ($\mu m$) | 0,35 |
| $D_{90}$ ($\mu m$) | 0,9 |

Ce microbroyage est effectué dans un broyeur humide à billes (billes de zircone à 3 mol% d'$Y_2O_3$, de diamètre

0,8 mm) ou broyeur à attrition. Après le microbroyage, la poudre présente un diamètre médian égal à 0,3 $\mu$m. La teneur en matière sèche de la suspension est de 50% massique.

Les liants, sous la forme de solutions à 50% massique, sont ensuite ajoutés à la suspension.

La barbotine ainsi obtenue est maintenue sous agitation pendant 12 heures.

A l'étape b), la barbotine est ensuite atomisée sur un équipement FSD Minor commercialisé par la société GEA NIRO, avec une température en entrée de l'atomiseur de 280°C et une température en sortie de l'atomiseur de 100°C. A l'issue de l'étape b), une poudre de granules est obtenue.

A l'étape c), la poudre de granules est tamisée au tamis de 400 $\mu$m.

A l'étape B), et pour chacune des poudres de granules obtenues en fin d'étape A), les préformes suivantes ont été réalisées :

- des pastilles de diamètre 32 mm et de masse 8 grammes ont été réalisées par pressage uniaxial à une pression de 100 MPa pour la mesure de la masse volumique apparente,
- 10 barrettes présentant une section 4 $\times$ 5 cm$^2$ et une longueur de 10 cm ont été réalisées par pressage uniaxial à une pression de 100 MPa pour la mesure du rendement,
- des barrettes de section 1 $\times$ 1 cm$^2$ et de longueur 3 cm ont été réalisées par pressage uniaxial à une pression de 100 MPa pour la mesure de la flexion 3 points.

Les préformes ainsi obtenues n'ont pas subi d'étape C).

A l'étape D), lesdites préformes ont été frittées suivant le cycle suivant :

- montée en température à 500°C à 100°C/h,
- maintien à 500°C pendant 2 heures,
- montée en température jusqu'à 1500°C, à 100°C/h,
- maintien à 1500°C pendant 2 heures,
- descente en température par refroidissement naturel.

A l'étape E), les barrettes destinées aux mesures de flexion 3 points ont été usinées aux dimensions requises pour réaliser cette mesure (25 x 10 x 3 mm$^3$).

Les propriétés des exemples ont été évaluées suivant les méthodes de caractérisation suivantes:

- La matière sèche est mesurée après un séchage à 110°C pendant au moins deux heures.
- La coulabilité d'une poudre de granules est mesurée par un équipement de type « coupe Ford », selon la norme NF EN 658 -5. La mesure consiste à évaluer la durée nécessaire à 200 g de poudre pour couler à travers un entonnoir de diamètre interne 10 mm. La coulabilité de la poudre est ensuite calculée par le rapport égal à la masse de poudre divisée par la durée nécessaire à son écoulement au travers de l'entonnoir.
- La masse volumique non tassée d'une poudre de granules est mesurée par un équipement de type « coupe Ford », selon la norme NF EN 725-9. La mesure consiste à évaluer la masse de poudre de granules introduite après remplissage d'un récipient de dimensions standard. La masse volumique non tassée est ensuite calculée en donnant le rapport de la masse de poudre sur le volume du récipient.
- La masse volumique absolue d'une poudre de granules est mesurée par pycnométrie à hélium sur un équipement AccuPyc 1330 de Micromeretics®. La poudre de granules est préalablement calcinée à 500°C pendant 2 heures.
- La masse volumique réelle d'une poudre de granules est mesurée par porosimétrie au mercure sur un équipement Hg porosimeter AutoPores IV 9500 commercialisé par la société Micromeretics®. Une masse de 1 gramme de poudre de granules est introduite dans l'équipement. Après mise sous vide primaire pendant 5 minutes, le mercure est introduit par pas de 3447 Pa (soit 0,5 psi). La masse volumique réelle est calculée par :

$$Masse\ volumique\ réelle = \frac{masse\ poudre}{Volume\ total - Volume\ Hg\ 100\ psi}$$

le volume total étant égal au volume à vide de la chambre de mesure et le volume Hg 100 psi étant le volume de mercure Hg introduit dans la chambre en présence de la poudre à une pression de 0,689 MPa (soit 100 psi).
- La masse volumique apparente d'une pièce frittée est mesurée sur des échantillons de diamètre 30 mm et d'épaisseur 3 mm, obtenus après pressage à 100 MPa de la poudre de granules selon l'exemple considéré, et frittés suivant le cycle suivant : montée à 500°C à une vitesse de 100°C/h, palier de 2 heures à 500°C, montée à 1500°C à une vitesse de 100°C/h, palier de 2 heures à 1500°C, descente à 500°C à une vitesse de 200°C/h, puis refroidissement libre.

- Le module de rupture est mesuré sur des barrettes 25 x 10 x 3 mm$^3$ usinées dans des pièces obtenues par pressage à 100 MPa de la poudre de granules selon l'exemple considéré, et frittées suivant le cycle suivant : montée à 500°C à une vitesse de 100°C/h, palier de 2 heures à 500°C, montée à 1500°C à une vitesse de 100°C/h, palier de 2 heures à 1500°C, descente à 500°C à une vitesse de 200°C/h, puis refroidissement libre.

- Les répartitions granulométriques sont déterminées à l'aide d'un granulomètre laser Partica LA-950 commercialisé par la société HORIBA. La poudre de granules est directement introduite dans le granulomètre laser pour la mesure, sans mise en suspension.

- L'analyse chimique est déterminée par spectroscopie de fluorescence X pour les éléments dont la teneur est supérieure à 0,1% massique ; si la teneur en un élément est inférieure à 0,1% massique, elle est déterminée par ICP (Induction Coupled Plasma), sur un modèle Vista AX (commercialisé par la société Varian).

- L'indice de sphéricité est mesuré sur un équipement Morphologi 3G commercialisé par la société Malvern Instruments. La poudre de granules est directement introduite dans l'équipement pour mesure. L'indice de sphéricité d'un granule est déterminé par le rapport du plus petit diamètre sur le plus grand diamètre, mesurés sur un cliché du granule réalisé par microscopie optique à un grossissement de $\times$ 10. Pour mesurer le pourcentage de granules présentant une sphéricité déterminée, on effectue un comptage statistique sur les granules observés sur 500 à 1000 clichés.

- Le module de rupture en flexion 3 points est mesuré suivant la norme NF EN 658 -5, sur une presse Lloyd, avec une distance entre appuis externes de 15 mm, sur des barrettes de longueur égale à 25 mm, de largeur égale à 10 mm et d'épaisseur égale à 3 mm.

- La nature et la teneur en additif temporaire et en liant(s), en particulier en polymères, sont mesurées par spectroscopie Infra-rouge sur un équipement Spectrum 400 commercialisé par Perkin Elmer. Les données d'intensité sont enregistrées sur un intervalle 4000-1000 cm$^{-1}$ avec un pas de 1 cm$^{-1}$. Les polymères sont identifiés par comparaison avec les données FTIR (spectroscopie infrarouge à transformée de Fourier, ou « Fourier Transformed InfraRed spectroscopy » en anglais) reportées par exemple dans l'ouvrage « Handbook of fourier transform Raman and infrared spectra of polymers », A. H. Kuptsov, German Nikolaevich Zhizhin, vol. 45, 1998, Elsevier. La nature et la teneur en polymères peuvent également être confirmées par d'autres méthodes bien connues telles que la chromatographie en phase liquide (HPLC) équipée de colonne(s) de séparation adaptée(s) à la nature et au nombre de composés à séparer. Un équipement tel que le Surveyor Plus commercialisé par Thermo Scientific, équipé d'une colonne Hypersil Gold de diamètre 1,9 $\mu$m peut être employé.

- La teneur totale en constituants temporaires est déterminée par la différence entre la masse de poudre après calcination à 1000°C et la masse de poudre après séchage à 110°C, ramenée à la masse totale après séchage.

- Le rendement de fabrication correspond au pourcentage de pièces frittées "conformes", c'est-à-dire ne présentant ni fissures, y compris dans leur coeur, ni défauts de surface, sur la base du nombre de pièces frittées fabriquées.

Tableau 3

| Exemple | 1 | 2 | 3 | 4 |
|---|---|---|---|---|
| **Analyse chimique des granules (% massique après séchage à 110°C pendant 2h)** | | | | |
| ZrO$_2$ | Complément à 100 | | | |
| Y$_2$O$_3$ | 4,5 | 4,5 | 4,5 | 4.5 |
| Al$_2$O$_3$ | 20 | 20 | 20 | 20 |
| liants | 3 | 3 | 3 | 3 |
| Impuretés | < 0,1 | < 0,1 | < 0,1 | < 0,1 |
| **Humidité résiduelle après séchage de 2 heures à 110°C, en pourcentage massique (sans séchage préalable)** | | | | |
| | 0,4 | 0,4 | 0,4 | 0,4 |
| **Liants** | | | | |
| Résine acrylique (Tg = - 10°C) | - | - | - | 2,5 |
| Résine acrylique (Tg = 10°C) | 2,5 | - | 2,5 | - |
| PEG 4000 (Tg = 35°C) | 0,5 | - | 0,5 | 0,5 |
| PEG 20000 (Tg = 45°C) | - | 1 | - | - |
| APV hydrolysé à 95% (Tg = 70°C) | - | 2 | - | - |

(suite)

| Propriétés de la poudre de granules | | | | |
|---|---|---|---|---|
| $D_{10}$ ($\mu$m) | 30 | 70 | 70 | 70 |
| $D_{50}$ ($\mu$m) | 60 | 110 | 110 | 110 |
| $D_{90}$ ($\mu$m) | 100 | 200 | 200 | 200 |
| $D_{99.5}$ ($\mu$m) | 200 | 300 | 300 | 300 |
| Indice de sphéricité | > 0,8 | > 0,8 | >0,8 | > 0,8 |
| Masse volumique relative (%) | 40 | 50 | 40 | 40 |
| Masse volumique non tassée (g/cm$^3$) | 1,10 | 1,50 | 1,50 | 1,50 |
| Coulabilité (g/s) | 0,5 | 2 | 2 | 2 |
| Propriétés de la pièce frittée obtenue après pressage des granules et frittage à 1500°C | | | | |
| Masse volumique apparente (g/cm$^3$) | 5.40 | 5.15 | 5.40 | 5,40 |
| Module de rupture en flexion 3 pts (MPa) | 950 | 800 | 950 | 950 |
| Rendement de fabrication | 40% | - | 100% | - |

Les inventeurs considèrent que l'aptitude au remplissage d'un moule peut être évaluée par la masse volumique non tassée de la poudre et par sa coulabilité. Une masse volumique non tassée élevée et une valeur de coulabilité élevée correspondent à une bonne aptitude au remplissage d'un moule.

Le tableau 3 permet de faire les constats suivants :

La poudre de granules de l'exemple 1, utilisant les mêmes liants que la poudre de l'exemple 3 présente une masse volumique non tassée, ainsi qu'une valeur de coulabilité plus faibles. Son aptitude au remplissage d'un moule est moins élevée que celles des poudres des exemples 2 à 4. Le rendement de fabrication de pièces de dimensions 10 x 5 x 4 cm$^3$ (volume de 200 cm$^3$) est très inférieur à celui obtenu avec la poudre de granules de l'exemple 3, ce qui illustre l'intérêt d'un diamètre médian $D_{50}$ supérieur à 80 $\mu$m.

La poudre de granules de l'exemple 2 utilisant des liants ne présentant pas une température de transition vitreuse inférieure à 25°C ne permet pas, après pressage et frittage, d'obtenir une pièce frittée présentant une forte masse volumique et un module de rupture en flexion 3 points élevé.

La poudre de granules de l'exemple 4 selon l'invention contient 2,5% d'une résine acrylique présentant une température de transition vitreuse égale à -10°C.

La poudre de granules de l'exemple 3 selon l'invention permet la fabrication avec de forts rendements de pièces frittées de grand volume et présentant des propriétés mécaniques remarquables.

Bien entendu, l'invention n'est pas limitée aux modes de réalisation fournis à titre d'exemples.

En particulier, la masse volumique apparente d'une pièce frittée selon l'invention n'est pas limitative.

En outre, d'autres procédés que l'atomisation peuvent être mis en oeuvre pour fabriquer une poudre de granules selon l'invention, par exemple un procédé faisant intervenir une étape de lyophilisation, ou un procédé faisant intervenir une étape de granulation en lit fluidisé, ou une étape de granulation à l'aide d'un malaxeur à pales.

## Revendications

1. Poudre de granules destinée notamment à la fabrication de pièces frittées céramiques, ladite poudre présentant la composition chimique massique suivante, sur la base de la matière sèche :

    - $ZrO_2$: complément à 100% ;
    - un stabilisant de la zircone choisi dans le groupe formé par $Y_2O_3$, $Sc_2O_3$, MgO, CaO, $CeO_2$, et leurs mélanges, la teneur massique en stabilisant, sur la base de la somme des teneurs en zircone et en stabilisant, étant comprise entre 2,0% et 20%, la teneur MgO + CaO étant inférieure à 5,0%, sur la base de la somme des teneurs en zircone et en stabilisant ;
    - au moins 1,0% d'un premier liant présentant une température de transition vitreuse inférieure ou égale à 25°C ;
    - 0 à 4,0% d'un liant additionnel présentant une température de transition vitreuse supérieure à 25°C ;
    - 5 à 50,0% d'alumine ;

- 0 à 2,0% d'un additif de frittage de l'alumine ;
- 0 à 4,0% d'un additif temporaire différent d'un premier liant et d'un liant additionnel, la teneur totale dudit premier liant, dudit liant additionnel et dudit additif temporaire étant inférieure à 9,0% ;
- 0 à 6% d'un oxyde additionnel choisi parmi un oxyde de manganèse, ZnO, $La_2O_3$, SrO, BaO et leurs mélanges ;
- moins de 2,0% d'impuretés ;

la teneur totale en oxyde de lanthane étant inférieure à 6,0% ;
le diamètre médian $D_{50}$ de la poudre étant compris entre 80 et 130 $\mu$m, le percentile $D_{99,5}$ étant inférieur à 500 $\mu$m et la masse volumique relative des granules étant comprise entre 30% et 60%.

2. Poudre selon la revendication précédente, dans laquelle

- le stabilisant est choisi dans le groupe formé par $Y_2O_3$, $Sc_2O_3$ et leurs mélanges et la teneur dudit stabilisant est inférieure à 6,5%, sur la base de la somme de $ZrO_2$, $Y_2O_3$ et $Sc_2O_3$; ou
- le stabilisant est choisi dans le groupe formé par MgO, CaO et leurs mélanges et la teneur dudit stabilisant est inférieure à 4%, sur la base de la somme de $ZrO_2$, MgO et CaO; ou
- le stabilisant est $CeO_2$ et la teneur dudit stabilisant est supérieure à 10% et inférieure à 15%, sur la base de la somme de $ZrO_2$, $Y_2O_3$ et $CeO_2$.

3. Poudre selon l'une quelconque des revendications précédentes, dans laquelle le stabilisant est choisi dans le groupe formé par $Y_2O_3$, $CeO_2$ et leurs mélanges, et respecte la relation $10\% \leq 3.Y_2O_3 + CeO_2 \leq 20\%$, sur la base de la somme de $ZrO_2$, $Y_2O_3$ et $CeO_2$.

4. Poudre selon l'une quelconque des revendications précédentes, dans laquelle

- le stabilisant est $Y_2O_3$, et
- la teneur en stabilisant est comprise entre 4,5% et 5,5%, en pourcentage en masse sur la base de la somme de $ZrO_2$ et $Y_2O_3$, et
- la teneur en alumine est supérieure à 15% et inférieure à 25%, en pourcentage en masse sur la base de la matière sèche, et
- la teneur en oxyde de lanthane est supérieure à 0,2% et inférieure à 0,8% en pourcentage en masse sur la base de la matière sèche, et
- la teneur en premier liant est comprise entre 2,5% et 4%, en pourcentage en masse sur la base de la matière sèche, et
- la teneur en impuretés est inférieure à 0,5%, en pourcentage en masse sur la base de la matière sèche, et
- la teneur en humidité résiduelle est comprise entre 0,2 et 1%, en pourcentage en masse sur la base de la poudre humide,
ou dans laquelle
- le stabilisant est $Y_2O_3$,
- la teneur en stabilisant est comprise entre 4,5% et 5,5%, en pourcentage en masse sur la base de la somme de $ZrO_2$ et $Y_2O_3$,
- la teneur en alumine est supérieure à 15% et inférieure à 25%, en pourcentage en masse sur la base de la matière sèche,
- la teneur en premier liant est comprise entre 2,5% et 4%, en pourcentage en masse sur la base de la matière sèche, et
- la teneur en impuretés est inférieure à 0,5%, en pourcentage en masse sur la base de la matière sèche,
- la teneur en humidité résiduelle est comprise entre 0,2 et 1%, en pourcentage en masse sur la base de la poudre humide,
ou dans laquelle
- le stabilisant de la zircone est $CeO_2$,
- la teneur en stabilisant est comprise entre 10 et 15%, en pourcentage en masse sur la base de la somme de $ZrO_2$ et $CeO_2$,
- la teneur en alumine est supérieure à 15% et inférieure à 25%, en pourcentage en masse sur la base de la matière sèche,
- la teneur en premier liant est comprise entre 2,5 et 4%, en pourcentage en masse sur la base de la matière sèche, et
- la teneur en impuretés est inférieure à 0,5%, en pourcentage en masse sur la base de la matière sèche, et
- la teneur en humidité résiduelle est comprise entre 0,2 et 1%, en pourcentage en masse sur la base de la poudre humide,
ou dans laquelle

- le stabilisant de la zircone est un mélange de $Y_2O_3$ et de $CeO_2$,
- la teneur en $Y_2O_3$ est comprise entre 1% et 2%, en pourcentage en masse sur la base de la somme de $ZrO_2$, $Y_2O_3$ et $CeO_2$,
- la teneur en $CeO_2$ est comprise entre 11% et 13%, en pourcentage en masse sur la base de la somme de $ZrO_2$, $Y_2O_3$ et $CeO_2$ de la matière sèche,
- la teneur en alumine est supérieure à 15% et inférieure à 25%, en pourcentage en masse sur la base de la matière sèche,
- la teneur en premier liant est comprise entre 2,5% et 4%, en pourcentage en masse sur la base de la matière sèche,
- la teneur en impuretés est inférieure à 0,5%, de préférence 0,1%, et
- la teneur en humidité résiduelle est comprise entre 0,2 et 1%, de préférence comprise entre 0,2 et 0,6%, en pourcentage en masse sur la base de la poudre humide.

5. Poudre selon l'une quelconque des revendications précédentes, dans laquelle la teneur en liant additionnel est comprise entre 0,5% et 1%, en pourcentage en masse sur la base de la matière sèche ou dans laquelle

   - la teneur en liant additionnel est comprise entre 0,5% et 1%, en pourcentage en masse sur la base de la matière sèche, et
   - la teneur en additif temporaire est comprise entre 0,5% et 1%.

6. Poudre selon l'une quelconque des revendications précédentes, dans laquelle la teneur en ledit oxyde additionnel est supérieure à 0,3%, en pourcentage en masse sur la base de la matière sèche.

7. Poudre selon l'une quelconque des revendications précédentes, dans laquelle les granules comportent des particules dans lesquelles la zircone est stabilisée et/ou incorporent des particules de zircone dont le diamètre médian $D_{50}$ est inférieur à 1 $\mu$m et/ou contiennent de l'alumine $Al_2O_3$, la teneur en alumine dans la poudre étant supérieure à 15% et inférieure 25%, en pourcentage en masse sur la base de la matière sèche et/ou incorporent des particules d'alumine dont le diamètre médian est inférieur à 5 $\mu$m.

8. Poudre selon l'une quelconque des revendications précédentes, dans laquelle le premier liant présente une température de transition vitreuse supérieure à -30°C et inférieure à 15°C et/ou est choisi parmi les polymères organiques amorphes, les résines polyacryliques, les polymères à base d'acrylates purs, les co-polymères à base d'acrylates et de styrène, et leurs mélanges.

9. Poudre selon l'une quelconque des revendications précédentes, dans laquelle le premier liant et/ou le liant additionnel sont choisis parmi les polymères ne contenant pas d'éléments inorganiques.

10. Poudre selon l'une quelconque des revendications précédentes, dans laquelle ledit additif temporaire est un additif organique, la teneur dudit additif organique étant inférieure à 1%, la teneur totale en liant(s) et en additif organique étant inférieure à 5%, ledit additif organique étant choisi parmi les dispersants ou tensio-actifs, les épaississants, les anti-moussants, les conservateurs, les lubrifiants, et leurs mélanges.

11. Poudre selon l'une quelconque des revendications précédentes, dans laquelle au moins une partie dudit stabilisant est remplacée par une quantité équivalente de précurseur dudit stabilisant.

12. Poudre selon l'une quelconque des revendications précédentes, dans laquelle la zircone, l'alumine, le premier liant, le liant additionnel et l'additif temporaire sont répartis de façon homogène au sein des granules de la poudre.

13. Poudre selon l'une quelconque des revendications précédentes, dans laquelle plus de 80 % des granules présentent ladite composition chimique.

14. Poudre selon l'une quelconque des revendications précédentes, dans laquelle

   - le diamètre médian $D_{50}$ est supérieur à 90 $\mu$m et inférieur à 120 $\mu$m; et/ou
   - le percentile 10 $D_{10}$ est supérieur à 40 $\mu$m; et/ou
   - le percentile 90 $D_{90}$ est inférieur à 300 $\mu$m; et/ou

- le percentile 99,5 $D_{99,5}$ est inférieur à 400 $\mu$m.

**15.** Poudre selon l'une quelconque des revendications précédentes, dans laquelle la teneur en humidité résiduelle est comprise entre 0,2 et 1%, en pourcentage en masse sur la base de la poudre humide.

**16.** Procédé de fabrication d'une pièce frittée comportant les étapes suivantes:

A) mélange de matières premières pour former une charge de départ comportant une poudre de granules selon l'une quelconque des revendications précédentes, ladite poudre de granules représentant au moins 60 % de la masse de la charge de départ,
B) mise en forme d'une préforme à partir de ladite charge de départ,
C) optionnellement usinage de ladite préforme,
D) frittage de ladite préforme de manière à obtenir ladite pièce frittée,
E) optionnellement, usinage et/ou rectification de ladite pièce frittée.

## Patentansprüche

**1.** Granulatpulver, welches insbesondere bestimmt ist für die Herstellung von gesinterten keramischen Teilen, wobei das Pulver eine chemische Massenzusammensetzung auf der Basis der Trockenmasse in folgender Weise aufweist:

- $ZrO_2$: Vervollständigt zu 100%;
- ein Stabilisator des Zirkonoxyds ausgewählt aus der Gruppe, die gebildet ist durch $Y_2O_3$, $Sc_2O_3$, MgO, CaO, $CeO_2$, und deren Mischungen, wobei der Massengehalt des Stabilisators auf der Basis der Summe der Gehalte an Zirkonoxyd und an Stabilisator zwischen 2,0% und 20% liegt, der Gehalt an MgO + CaO kleiner als 5% auf der Basis der Summe der Gehalte an Zirkonoxyd und Stabilisator ist;
- mindestens 1,0% eines ersten Bindemittels, welches eine Übergangstemperatur in eine nichtkristalline Struktur von kleiner oder gleich 25°C aufweist;
- 0 bis 4% eines zusätzlichen Bindemittels, welches eine Übergangstemperatur in eine nichtkristalline Struktur von größer als 25°C aufweist;
- 5 bis 50,0% von Aluminiumoxyd;
- 0 bis 2,0% eines Zusatzes zur Sinterung von Aluminiumoxyd;
- 0 bis 4,0% eines temporären Zusatzes, welcher verschieden ist von einem ersten Bindemittel und einem zusätzlichen Bindemittel, wobei der Gesamtgehalt des ersten Bindemittels, des zusätzlichen Bindemittels und des temporären Zusatzes kleiner als 9,0% ist;
- 0 bis 6% eines zusätzlichen Oxyds, welches ausgewählt ist unter einem Oxyd von Mangan, ZnO, $La_2O_3$, SrO, BaO und deren Mischungen;
- weniger als 2,0% Verunreinigungen;

wobei der Gesamtgehalt an Lanthanoxyd kleiner als 6,0% ist;
der mittlere Durchmesser $D_{50}$ des Pulvers zwischen 80 und 130 $\mu$m liegt, die Percentile $D_{99,5}$ kleiner als 500 $\mu$m und die relative Volumenmasse der Granulate zwischen 30% und 60% liegt.

**2.** Pulver nach dem vorhergehenden Anspruch, in welchem

- der Stabilisator ausgewählt ist aus der Gruppe, die gebildet ist durch $Y_2O_3$, $Sc_2O_3$ und ihren Mischungen und der Gehalt des Stabilisators kleiner als 6,5% ist auf der Basis der Summe von $ZrO_2$, $Y_2O_3$ und $Sc_2O_3$; oder
- der Stabilisator ausgewählt ist aus der Gruppe, die gebildet ist durch MgO, CaO und ihren Mischungen und der Gehalt des Stabilisators kleiner als 4% ist auf der Basis der Summe von $ZrO_2$, MgO und CaO; oder
- der Stabilisator $CeO_2$ ist und der Gehalt dieses Stabilisators größer als 10% und kleiner als 15% ist auf der Basis der Summe von $ZrO_2$, $Y_2O_3$ und $CeO_2$.

**3.** Pulver nach einem der vorhergehenden Ansprüche, in welchem der Stabilisator ausgewählt ist aus der Gruppe, die gebildet ist durch $Y_2O_3$, $CeO_2$ und ihren Mischungen, und das Verhältnis 10% $\leq 3.Y_2O_3 + CeO_2 \leq 20\%$ beachtet, auf der Basis der Summe von $ZrO_2$, $Y_2O_3$ und $CeO_2$.

**4.** Pulver nach einem der vorhergehenden Ansprüche, in welchem

- Stabilisator $Y_2O_3$ ist, und
- der Gehalt an Stabilisator zwischen 4,5% und 5,5% in Massenprozenten auf der Basis der Summe von $ZrO_2$ und $Y_2O_3$ liegt, und
- der Gehalt an Aluminiumoxyd größer als 15% und kleiner als 25% ist in Massenprozenten auf der Basis der Trockenmasse, und
- der Gehalt an Lanthanoxyd größer als 0,2% und kleiner als 0,8% ist in Massenprozenten auf der Basis der Trockenmasse, und
- der Gehalt an einem ersten Bindemittel zwischen 2,5% und 4% in Massenprozenten auf der Basis der Trockenmasse liegt, und
- der Gehalt an Verunreinigungen kleiner als 0,5% in Massenprozent auf der Basis der Trockenmasse ist, und
- der Gehalt an Restfeuchtigkeit zwischen 0,2 und 1% in Massenprozenten auf der Basis des feuchten Pulvers ist, oder in welchem
- der Stabilisator $Y_2O_3$ ist
der Gehalt an Stabilisator zwischen 4,5% und 5,5% in Massenprozenten auf der Basis der Summe von $ZrO_2$ und $Y_2O_3$ ist,
- der Gehalt an Aluminiumoxyd größer als 15% und kleiner als 25% in Massenprozenten auf der Basis der Trockenmasse ist,
- der Gehalt an einem ersten Bindemittel zwischen 2,5% und 4% in Massenprozenten auf der Basis der Trockenmasse liegt, und
- der Gehalt an Verunreinigungen kleiner als 0,5% in Massenprozent auf der Basis der Trockenmasse ist,
- der Gehalt an Restfeuchtigkeit zwischen 0,2 und 1% in Massenprozent auf der Basis des feuchten Pulvers liegt, oder in welchem
- der Stabilisator des Zirkonoxyds $CeO_2$ ist,
- der Gehalt an Stabilisator zwischen 10 und 15% in Massenprozent auf der Basis der Summe von $ZrO_2$ und $CeO_2$ liegt,
- der Gehalt an Aluminiumoxyd größer als 15% und kleiner als 25% in Massenprozenten auf der Basis der Trockenmasse ist,
- der Gehalt an einem ersten Bindemittel zwischen 2,5 und 4% in Massenprozent auf der Basis der Trockenmasse liegt, und
- der Gehalt an Verunreinigungen kleiner als 0,5% in Massenprozent auf der Basis der Trockenmasse ist, und
- der Gehalt an Restfeuchtigkeit zwischen 0,2 und 1 % in Massenprozent auf der Basis des feuchten Pulvers liegt, oder in welchem
- der Stabilisator des Zirkonoxyds eine Mischung aus $Y_2O_3$ und $CeO_2$ ist,
- der Gehalt an $Y_2O_3$ zwischen 1% und 2% in Massenprozent auf der Basis der Summe von $ZrO_2$, $Y_2O_3$ und $CeO_2$ liegt,
- der Gehalt an $CeO_2$ zwischen 11 % und 13% in Massenprozent auf der Basis der Summe von $ZrO_2$, $Y_2O_3$ und $CeO_2$ der Trockenmasse liegt,
- der Gehalt an Aluminiumoxyd größer als 15% und kleiner als 25% in Massenprozenten auf der Basis der Trockenmasse ist,
- der Gehalt eines ersten Bindemittels zwischen 2,5% und 4% in Massenprozent auf der Basis der Trockenmasse liegt,
- der Gehalt an Verunreinigungen kleiner als 0,5% vorzugsweise 0,1% ist und
- der Gehalt an Restfeuchtigkeit zwischen 0,2 und 1%, vorzugsweise zwischen 0,2 und 0,6% in Massenprozent auf der Basis des feuchten Pulvers liegt.

5. Pulver nach einem der vorhergehenden Ansprüche, in welchem der Gehalt an zusätzlichem Bindemittel zwischen 0,5% und 1% in Massenprozent auf der Basis der Trockenmasse liegt oder in welchem

- der Gehalt an zusätzlichem Bindemittel zwischen 0,5% und 1% in Massenprozent auf der Basis der Trockenmasse liegt, und
- der Gehalt an einem temporärem Additiv zwischen 0,5% und 1% liegt.

6. Pulver nach einem der vorhergehenden Ansprüche, in welchem der Gehalt an dem zusätzlichem Oxyd größer als 0,3% in Massenprozent auf der Basis der Trockenmasse ist.

7. Pulver nach einem der vorhergehenden Ansprüche, in welchem die Körner Teilchen enthalten, in denen das Zirkonoxyd stabilisiert ist und/oder Teilchen von Zirkonoxyd enthalten, deren mittlerer Durchmesser $D_{50}$ kleiner als 1 $\mu m$ ist und/oder Aluminiumoxyd $Al_2O_3$ enthalten, wobei der Gehalt an Aluminiumoxyd in dem Pulver größer als 15% und kleiner als 25% in Massenprozent auf der Basis der Trockenmasse ist und/oder Teilchen von Aluminiumoxyd enthalten, deren mittlerer Durchmesser kleiner als 5 $\mu$m ist.

8. Pulver nach einem der vorhergehenden Ansprüche, in welchem das erste Bindemittel eine Temperatur beim Übergang in die nichtkristalline Phase größer als -30°C und kleiner als 15°C aufweist und/oder ausgewählt ist aus den amorphen organischen Polymeren, Polyacrylharzen, aus den Polymeren auf der Basis von reinem Acrylat, den Copolymeren auf der Basis von Acrylat und Styren und deren Mischungen.

9. Pulver nach einem der vorhergehenden Ansprüche, in welchem das erste Bindemittel und/oder das zusätzliche Bindemittel ausgewählt sind aus den Polymeren, welche keine anorganischen Elemente enthalten.

10. Pulver nach einem der vorhergehenden Ansprüche, in welchem das temporäre Additiv ein organisches Additiv ist, wobei der Gehalt des organischen Additivs kleiner als 1% ist, der Gesamtgehalt an Bindemittel(n) und an organischem Additiv kleiner als 5% ist, wobei das organische Additiv ausgewählt ist aus Dispersionsmitteln, oberflächenaktiven Stoffen, Verdickungsmitteln, Entschäumungsmitteln, Konservierungsmitteln, Trennmitteln und ihren Mischungen.

11. Pulver nach einem der vorhergehenden Ansprüche, in welchem mindestens ein Teil des Stabilisators ersetzt ist durch eine äquivalente Menge der Vorläufer des Stabilisators.

12. Pulver nach einem der vorhergehenden Ansprüche, in welchem das Zirkonoxyd, das Aluminiumoxyd, das erste Bindemittel, das zusätzliche Bindemittel und das temporäre Additiv in homogener Art und Weise innerhalb der Pulverteilchen verteilt sind.

13. Pulver nach einem der vorhergehenden Ansprüche, in welchem mehr als 80% der Körner besagte chemische Zusammensetzung aufweisen.

14. Pulver nach einem der vorhergehenden Ansprüche, in welchem

- der mittlere Durchmesser $D_{50}$ größer als 90 $\mu$m und kleiner als 120 $\mu$m; und/oder
- die Percentile 10 $D_{10}$ größer als 40 $\mu$m ist; und/oder
- die Percentile 90 $D_{90}$ kleiner als 300 $\mu$m ist; und/oder
- die Percentile 99,5 $D_{99,5}$ kleiner als 400 $\mu$m ist.

15. Pulver nach einem der vorhergehenden Ansprüche, in welchem der Gehalt an Restfeuchtigkeit zwischen 0,2 und 1% in Massenprozent auf der Basis des feuchten Pulvers liegt.

16. Verfahren zur Herstellung eines gesinterten Teiles mit den folgenden Verfahrensschritten:

A) Mischung erster Materialien um eine Ausgangscharge zu bilden, die ein Granulatpulver nach einem der vorhergehenden Ansprüche aufweist, wobei das Granulatpulver wenigstens 60% der Masse der Ausgangscharge betrifft,
B) formen einer Vorform aus der Ausgangscharge,
C) optionelle Bearbeitung der Vorform,
D) Sinterung der Vorform des Materials um das gesinterte Teil zu erhalten,
E) optionelle Bearbeitung und/oder Schleifen des gesinterten Teils.

## Claims

1. A powder comprising granules which is intended in particular for the manufacture of ceramic sintered parts, said powder exhibiting the following chemical composition by weight, based on the dry matter:

- $ZrO_2$: remainder to 100%;
- a zirconia stabilizer chosen from the group formed by $Y_2O_3$, $Sc_2O_3$, MgO, CaO, $CeO_2$, and their mixtures, the content by weight of stabilizer, on the basis of the sum of the contents of zirconia and stabilizer, being between 2.0% and 20%, and the MgO + CaO content being less than 5.0%, on the basis of the sum of the contents of zirconia and stabilizer;

- at least 1.0% of a first binder exhibiting a glass transition temperature of less than or equal to 25°C;
- from 0 to 4.0% of an additional binder exhibiting a glass transition temperature of greater than 25°C;
- from 5 to 50.0% of alumina;
- from 0 to 2.0% of an alumina sintering additive;
- from 0 to 4.0% of a temporary additive other than a first binder and than an additional binder, the total content of said first binder, said additional binder and said temporary additive being less than 9.0%;
- from 0 to 6% of an additional oxide chosen from a manganese oxide, ZnO, $La_2O_3$, SrO, BaO and their mixtures;
- less than 2.0% of impurities;

the total content of lanthanum oxide being less than 6.0%;
the median diameter $D_{50}$ of the powder being between 80 and 130 $\mu$m, the percentile $D_{99.5}$ being less than 500 $\mu$m and the relative density of the granules being between 30% and 60%.

2. The powder as claimed in the preceding claim, in which:

- the stabilizer is chosen from the group formed by $Y_2O_3$, $Sc_2O_3$ and their mixtures and the content of said stabilizer is less than 6.5%, on the basis of the sum of $ZrO_2$, $Y_2O_3$ and $Sc_2O_3$; or
- the stabilizer is chosen from the group formed by MgO, CaO and their mixtures and the content of said stabilizer is less than 4%, on the basis of the sum of $ZrO_2$, MgO and CaO; or
- the stabilizer is $CeO_2$ and the content of said stabilizer is greater than 10% and less than 15%, on the basis of the sum of $ZrO_2$, $Y_2O_3$ and $CeO_2$.

3. The powder as claimed in either one of the preceding claims, in which the stabilizer is chosen from the group formed by $Y_2O_3$, $CeO_2$ and their mixtures and observes the relationship $10\% \leq 3*Y_2O_3 + CeO_2 \leq 20\%$, on the basis of the sum of $ZrO_2$, $Y_2O_3$ and $CeO_2$.

4. The powder as claimed in any one of the preceding claims, in which:

- the stabilizer is $Y_2O_3$, and
- the stabilizer content is between 4.5% and 5.5%, as percentage by weight on the basis of the sum of $ZrO_2$ and $Y_2O_3$, and
- the alumina content is greater than 15% and less than 25%, as percentage by weight based on the dry matter, and
- the content of lanthanum oxide is greater than 0.2% and less than 0.8%, as percentage by weight based on the dry matter, and
- the content of first binder is between 2.5% and 4%, as percentage by weight based on the dry matter, and
- the content of impurities is less than 0.5%, as percentage by weight based on the dry matter, and
- the residual moisture content is between 0.2% and 1%, as percentage by weight on the basis of the wet powder, , or in which:
- the stabilizer is $Y_2O_3$,
- the stabilizer content is between 4.5% and 5.5%, as percentage by weight on the basis of the sum of $ZrO_2$ and $Y_2O_3$,
- the alumina content is greater than 15% and less than 25%, as percentage by weight based on the dry matter,
- the content of first binder is between 2.5% and 4%, as percentage by weight based on the dry matter,
- the content of impurities is less than 0.5%, as percentage by weight based on the dry matter, and
- the residual moisture content is between 0.2% and 1%, as percentage by weight on the basis of the wet powder, or in which:
- the zirconia stabilizer is $CeO_2$,
- the stabilizer content is between 10% and 15%, as percentage by weight on the basis of the sum of $ZrO_2$ and $CeO_2$,
- the alumina content is greater than 15% and less than 25%, as percentage by weight based on the dry matter,
- the content of first binder is between 2.5% and 4%, as percentage by weight based on the dry matter,
- the content of impurities is less than 0.5%, as percentage by weight based on the dry matter, and
- the residual moisture content is between 0.2% and 1%, as percentage by weight on the basis of the wet powder, or in which:
- the zirconia stabilizer is a mixture of $Y_2O_3$ and $CeO_2$,
- the $Y_2O_3$ content is between 1% and 2%, as percentage by weight on the basis of the sum of $ZrO_2$, $Y_2O_3$ and $CeO_2$,

- the CeO$_2$ content is between 11% and 13%, as percentage by weight on the basis of the sum of ZrO$_2$, Y$_2$O$_3$ and CeO$_2$ of the dry matter,
- the alumina content is greater than 15% and less than 25%, as percentage by weight based on the dry matter,
- the content of first binder is between 2.5% and 4%, as percentage by weight based on the dry matter,
- the content of impurities is less than 0.5%, preferably 0.1%, and
- the residual moisture content is between 0.2% and 1%, preferably between 0.2% and 0.6%, as percentage by weight on the basis of the wet powder.

5. The powder as claimed in any one of the preceding claims, in which the content of additional binder is between 0,5% et 1%, as percentage by weight based on the dry matter or in which :

   - the content of additional binder is between 0.5% and 1%, as percentage by weight based on the dry matter, and
   - the content of a temporary additive is between 0,5% and 1%.

6. The powder as claimed in any one of the preceding claims, in which the content of said additional oxide is greater than 0.3%, as percentage by weight based on the dry matter.

7. The powder as claimed in any one of the preceding claims, in which the granules comprise particles in which the zirconia is stabilized and/or
   incorporate zirconia particles for which the median diameter D$_{50}$ is less than 1 μm and/or
   comprise alumina Al$_2$O$_3$, the alumina content of the powder being greater than 15% and less than 25%, as percentage by weight based on the dry matter and/or
   incorporate particles of alumina for which the median diameter is less than 5 μm.

8. The powder as claimed in any one of the preceding claims, in which the first binder exhibits a glass transition temperature of greater than -30°C and less than 15°C, and/or
   is chosen from amorphous organic polymers, polyacrylic resins, polymers based on pure acrylates, copolymers based on acrylates and styrene, and their blends.

9. The powder as claimed in any one of the preceding claims, in which the first binder and/or the additional binder are chosen from polymers not comprising inorganic elements.

10. The powder as claimed in any one of the preceding claims, in which said temporary additive is an organic additive, the content of said organic additive being less than 1%, the total content of binder(s) and organic additive being less than 5%, said organic additive being chosen from dispersants or surfactants, thickeners, antifoaming agents, preservatives, lubricants and their mixtures.

11. The powder as claimed in any one of the preceding claims, in which at least a portion of said stabilizer is replaced with an equivalent amount of precursor of said stabilizer.

12. The powder as claimed in any one of the preceding claims, in which the zirconia, the alumina, the first binder, the additional binder and the temporary additive are homogeneously distributed in the granules of the powder.

13. The powder as claimed in any one of the preceding claims, in which more than 80% of the granules exhibit said chemical composition.

14. The powder as claimed in any one of the preceding claims, in which:

    - the median diameter D$_{50}$ is greater than 90 μm and less than 120 μm; and/or
    - the 10 percentile D$_{10}$ is greater than 40 μm; and/or
    - the 90 percentile D$_{90}$ is less than 300 μm; and/or
    - the 99.5 percentile D$_{99.5}$ is less than 400 μm.

15. The powder as claimed in any one of the preceding claims, in which the residual moisture content is between 0.2% and 1%, as percentage by weight on the basis of the wet powder.

16. A process for the manufacture of a sintered part comprising the following stages:

A) mixing starting materials in order to form a starting charge comprising a powder comprising granules as claimed in any one of the preceding claims, said powder comprising granules representing at least 60% of the weight of the starting charge,
B) forming a preform from said starting charge,
C) optionally machining said preform,
D) sintering said preform, so as to obtain said sintered part,
E) optionally machining and/or grinding said sintered part.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Polymer Handbook. John Wiley & Sons, 1999

- Handbook of fourier transform Raman and infrared spectra of polymers. **A. H. KUPTSOV.** German Nikolaevich Zhizhin. Elsevie, 1998, vol. 45